Europäisches Patentamt

European Patent Office

Office européen des brevets

(19)

(11) Veröffentlichungsnummer: **0 354 499**

**A2**

(12) # EUROPÄISCHE PATENTANMELDUNG

(21) Anmeldenummer: **89114496.6**

(22) Anmeldetag: **05.08.89**

(51) Int. Cl.⁴: **G11B 9/08 , G11B 9/00 , G11B 11/03 , G11C 11/46**

(30) Priorität: **11.08.88 DE 3827272**

(43) Veröffentlichungstag der Anmeldung:
**14.02.90 Patentblatt 90/07**

(84) Benannte Vertragsstaaten:
**BE CH DE ES FR GB IT LI NL SE**

(71) Anmelder: **BASF Aktiengesellschaft
Carl-Bosch-Strasse 38
D-6700 Ludwigshafen(DE)**

(72) Erfinder: **Petermann, Juergen, Prof. Dr.
Westpreussenweg 12
D-2150 Buxtehude(DE)**
Erfinder: **Wenderoth, Klaus, Dr.
Fritz-Kopp-Strasse 7
D-7997 Immenstaad(DE)**

(54) **Verfahren zur Informationsspeicherung.**

(57) Verfahren zur Informationsspeicherung in dünnen Polymerschichten, dadurch gekennzeichnet, daß man in einer dünnen, uniaxial orientierten Polymerschicht mittels energiereicher Strahlung lokal entsprechend der zu speichernden Information die Orientierung in der Polymerschicht ändert, wobei diese Orientierungsänderung ohne einen weiteren Entwicklungsschritt direkt zum Auslesen der Information verwendet werden kann.

EP 0 354 499 A2

## Verfahren zur Informationsspeicherung

Die Erfindung betrifft ein Verfahren zur Informationsspeicherung in dünnen Polymerschichten, bei dem die Information mittels energiereicher Strahlung eingeschrieben wird und ohne einen weiteren Entwicklungsschritt wieder ausgelesen werden kann.

Der Einsatz von Polymeren für die Informationsspeicherung ist seit langem bekannt und vielfach beschrieben worden (vgl. z.B. G. Kämpf, "Polymere als Träger und Speicher von Informationen", vorgelegt auf der 84. Allgemeinen Tagung der Deutschen Bunsengesellschaft, Aachen, Mai 1985). Hierbei kann die Informationsaufzeichnung und -speicherung in den Polymeren beispielsweise mittels Elektronenstrahlen erfolgen. In diesem Fall werden für die Aufzeichnung der Informationen in den Polymeren strahlungsinduzierte, lokale chemische Änderungen in den Makromolekülen, beispielsweise Kettenspaltungs-, Polymerabbau- oder Vernetzungsreaktionen, ausgenutzt. Stellvertretend für den einschlägigen bekannten Stand der Technik sei hierzu beispielsweise verwiesen auf F.L. Bouquet, J.W. Winslow, "Radiation Effects Response data for Synthetic Organic Insulation und Dielectrics", IEEE Trans. Nuc. Sci. Vol. NS-31, No. 6, Seiten 1387-1392, Dez. 1984 und J. Petermann, W. Gleiter, "Oberservations of radiation damage effects in paraffin and polyethylene crystals", Kolloid Z. u. Z. Polymere, Band 251, Seiten 850-856, 1973. Durch einen nachfolgenden Entwicklungsschritt, z.B. eine Behandlung mit selektiven Lösungsmitteln oder Trockenentwicklung durch Verdampfen, erhält man dann positiv oder negativ strukturierte Resistschchten (siehe u.a. M. Hatzakis, "Resists for Fine-Line Lithography", Proc. IEEE, Vol. 71, Seiten 570-574, Mai 1983, und H. Fuchs, J. Petermann, "Use of paraffins as negative acting electron-sensitive resists", J. Appl. Phys. 58 (2), Seiten 1056f, 3uly 1985). In der US-A-4 059 827 ist auch schon beschrieben worden, die Informationsspeicherung in Polymeren durch lokale Kristallisation oder elektrische Polung vorzunehmen. Die fortschreitende Technik und die stetig wachsenden Anforderungen an die Speicherung von Informationen erfordern eine ständige Weiter- und Neuentwicklung von Verfahren zur Informationsspeicherung.

Aufgabe der vorliegenden Erfindung ist demgemäß die Schaffung eines neuen, einfachen, breit und allgemein anwendbaren Verfahrens zur Informationsspeicherung, welches leistungsfähig und zuverlässig ist und den heutigen gestiegenen Anforderungen an ein solches Verfahren genügt.

Es wurde nun überraschend gefunden, daß diese Aufgabe durch ein Verfahren der in Rede stehenden Art gelöst wird, bei dem in einer dünnen, uniaxial orientierten Polymerschicht die Orientierung mittels energiereicher Strahlung lokal entsprechend der zu speichernden Information geändert wird, wobei diese Orientierungsänderung unmittelbar ohne einen weiteren Entwicklungsschritt auch zum Auslesen der Information verwendet werden kann.

Gegenstand der Erfindung ist dementsprechend ein Verfahren zur Informationsspeicherung in dünnen Polymerschichten, welches dadurch gekennzeichnet ist, daß man in einer dünnen, uniaxial orientierten Polymerschicht mittels energiereicher Strahlung lokal entsprechend der zu speichernden Information die Orientierung in der Polymerschicht ändert, wobei diese Orientierungsänderung ohne einen weiteren Entwicklungsschritt direkt zum Auslesen der Information verwendet werden kann. Gegenstand der Erfindung sind darüber hianus weitere Ausgestaltungsformen dieses Verfahrens gemäß der nachfolgenden definierten Beschreibung.

Die in dem erfindungsgemäßen Verfahren einzusetzenden dünnen Polymerschichten können aus beliebigen polymeren Materialien gebildet werden, sofern sie sich für die Herstellung von dünnen Schichten mit uniaxialer Orientierung eignen. Hierfür sehr geeignete Polymere sind unter anderem Polybuten-1, Polyethylen und Polyvinylidenfluorid. Die Dicke der dünnen Polymerschichten beträgt dabei vorzugsweise nicht mehr als 0,5 µm. Bei dickeren Schichten ist häufig wegen der Streuung der energiereichen Strahlung in der Schicht das Auflösevermögen für die Informationsspeicherung unbefriedigend. Ebenso nimmt dann die für das Einschreiben der Informationen notwendige Dosis der energiereichen Strahlung in unerwünschtem Maße zu. Die untere Grenze für die Dicke der dünnen Polymerschichten ergibt sich durch deren Präparationsmethoden. Im allgemeinen sind die dünen Polymerschichten für das erfindungsgemäße Verfahren umso vorteilhafter, je dünner sie sind.

Die erfindungsgemäß einzusetzenden dünnen Polymerschichten müssen uniaxial orientiert sein, d.h. in diesen Schichten sind die Polymermoleküle in einer Richtung in gleichmäßiger, bestimmter Weise, etwa in Form von lamellenartigen Kristallstrukturen, angeordnet und ausgerichtet. Diese uniaxial orientierten Polymerschichten sind bezüglich einer Reihe von Eigenschaften anisotrop. Beispielsweise zeigen die uniaxial orientierten dünnen Polymerschichten eine ausgeprägte Doppelbrechung; sie können aber auch z.B. in den verschiedenen Richtungen der Schicht unterschiedliche piezo- oder pyroelektrische Effekte in Abhängigkeit von der Orientierung zeigen. Diese richtungsabhängigen Eigenschaften der uniaxial orientierten dünnen Polymerschchten werden erfindungsgemäß für die Informationsspeicherung ausgenutzt.

Die Herstellung der erfindungsgemäß einzusetzenden dünnen, uniaxial orientierten Polymerschichten kann nach den an sich üblichen und bekannten Methoden, beispielsweise durch Verarbeiten des Polymeren aus Lösung und Abdampfen des Lösungsmittels erfolgen. Eine geeignete Methode ist beispielsweise in J. Petermann, R.M. Gohil, "A new method for preparation high modulus thermoplastic films", J. Mat. Sci, Letters, Seiten 2260, 1979 beschrieben. Danach werden kleine Mengen einer 1 bis 5 %igen Lösung des Polymeren in einem organischen Lösungsmittel in dünner Schicht über eine auf etwa 120°C aufgeheizte Glasplatte ausgebreitet. Nach dem Abdampfen des Lösungsmittels wird das zurückbleibende Polymer von der Glasplatte zu einem orientierten Film abgezogen.

Die dünnen, uniaxial orientierten Polymerschichten können in dem erfindungsgemäßen Verfahren als solche, d.h. trägerfrei, beispielsweise in Form selbsttragender Filme, eingesetzt werden. Sie können aber auch auf einem Träger, wie z.B. Glas oder einer Kunststoffolie, aufgebracht sein. Werden in dem erfindungsgemäßen Verfahren trägerunterstützte, dünne, uniaxiale orientierte Polymerschichten eingesetzt, ist darauf zu achten, daß das Trägermaterial so ausgewäht wird, daß es mit dem zum Auslesen der eingeschriebenen Information eingesetzten Verfahren nicht interferiert. Wird für die Informationsspeicherung beispielsweise die Doppelbrechung der dünnen, uniaxial orientierten Polymerschichten ausgenutzt, muß ein gegebenenfalls mitverwendeter Träger zumindest transparent sein. Vorzugsweise werden in dem erfindungsgemäßen Verfahren trägerfreie, dünne, uniaxial orientierte Polymerschichten eingesetzt.

Zum Einschreiben der zu speichernden Information in die dünnen, uniaxial orientierten Polymerschichten werden diese mit energiereicher elektromagnetischer Strahlung bestrahlt. Als Beispiele geeigneter energiereicher elektromagnetischer Strahlung seien genannt: UV-Laserstrahlen, Elektronenstrahlen, Ionenstrahlung, Synchroton- oder γ-Strahlung. Besonders günstig ist dabei die Verwendung von Laserstrahlen oder Elektronenstrahlen. Die für das Einschreiben der Informationen erforderliche optimale Strahlungsenergie und -dosis hängt unter anderem von der Art des Polymeren und der Dicke der Polymerschicht ab und kann im Einzelfall leicht an Hand einiger einfacher Vorversuche ermittelt werden.

Durch die Bestrahlung der dünnen, uniaxial orientierten Polymerschichten mit der energiereichen elektrmagnetischen Strahlung wird in den bestrahlten Bereichen die Orientierung in der Polymerschicht geändert, d.h. in aller Regel zerstört. Dementsprechend besitzen die bestrahlten Bereiche der dünnen Polymerscicht nicht mehr die richtungsabhängigen, durch die uniaxiale Orientierung bewirkten speziellen Eigenschaten der unbestrahlten Schicht. So wird beispielsweise die ursprünglich vorhandene Doppelbrechung der dünnen Polymerschicht durch die Bestrahlung mit der energiereichen elektromagnetischen Strahlung zerstört, was einfach und leicht optisch in einem Polarisationsmikroskop festgestellt werden kann. Es hat sich überraschend gezeigt, daß diese durch die Zerstörung der Orientierung bei der Bestrahlung mit energiereicher, elektromagnetischer Strahlung hervorgerufene Eigenschaftsänderung in der dünnen uniaxial orientierten Polymerschicht hervorragend und vorteilhaft für die Informationsspeicherung ausgenutzt werden kann.

Die Bestrahlung der dünnen, uniaxial orientierten Polymerschicht mit der energiereichen elektromagnetischen Strahlung erfolgt dabei lokal in einem der zu speichernden Information entsprechenden Muster. So kann die Bestrahlung der dünnen Polymerschicht beispielsweise durch eine Maske hindurch vorgenommen werden, die ein Muster bzw. Bild der zu speichernden Information aufweist. Die für die elektromagnetische Strahlung undurchlässigen Bereiche der Maske schützen dabei die darunter liegenden Bereiche der dünnen Polymerschicht und lassen diese unverändert, während unter den für die elektromagnetische Strahlung durchlässigen Bereichen der Maske die Orientierung in der dünnen Polymerschicht geändert, d.h. im allgemeinen zerstört wird. Vorteilhafterweise wird jedoch die Bestrahlung der dünnen uniaxial orientierten Polymerschicht mit der energiereichen elektromagnetischen Strahlung mittels eines auf die Polymerschicht fokussierten energiereichen Strahls vorgenommen, der entsprechend der einzuschreibenden Information bzw. in einem der einzuschreibenden Information entsprechenden Muster relativ über die dünne Polymerschicht bewegt wird.

Direkt nach dem Einschreiben der zu speichernden Information in die dünne Polymerschicht mittels der energiereichen elektromagnetischen Strahlung kann die eingeschriebene Information wieder ausgelesen werden, ohne daß es hierzu eines besonderen, weiteren Entwicklungsschrittes bedarf. Das Auslesen der Information kann, je nach der Eigenschaftsänderung, die hierfür herangezogen wird, beispielsweise mittels eines Polarisationsmikroskops, eines akustischen Mikroskops, durch Messung lokaler dielektrischer Eigenschaften oder pyroelektrischer Effekte erfolgen. Die Durchführung dieser Messungen sind an sich bekannt. Wird z.B. die Änderung in der Doppelbrechung der dünnen Polymerschicht für die Informationsspeicherung herangezogen, so kann man die in die dünne Polymerschicht eingeschriebene Information wieder auslesen, indem die beschriebene Polymerschicht unter die gekreuzten Polarisatoren eines Polarisationsmikroskops gelegt wird. Dabei wird die Polymerschicht so gedreht, daß die nicht beschriebenen, noch uniaxial orientierten und dementsprechend Doppelbrechung zeigenden Bereiche ihre größte Helligkeit aufweisen. Die beschriebenen Bereiche, in denen die Doppelbrechung zerstört ist, erscheinen dann auf Grund der optischen Extinktion des polarisierten Lichtes als dunkle Linien.

Das erfindungsgemäße Verfahren stellt eine neue, einfache, breit anwendbare Methode zur Informationsspeicherung in dünnen Polymerschichten dar.

Die Erfindung wird durch das nachfolgende Beispiel weiter erläutert.

Beispiel

Ein 0,2 μm dicker, uniaxial orientierter Film aus Polybuten-(1) wurde nach der vorstehend erwähnten Methode von Petermann und Gohil hergestellt. Zur Informationsspeicherung wurden jeweils 3 x 3 mm² Stücke dieses Polybuten-1-Films in einem Transmissionselektronenmikroskiop (TEM) bei 10.000facher Vergrößerng mit einem Elektronenstrahl mit einer Beschleunigungsspannung von 100 kV bestrahlt. Der auf den Polybuten-1-Film fokussierte Elektronenstrahl wurde entsprechend der einzuschreibenden Informationen über den Polymerfilm hinwegbewegt. Der Schreibprozeß konnte unmittelbar auf dem Leuchtschirm des TEM verfolgt werden. Unter einem Polarisationsmikroskop konnten die eingeschriebenen Linien bis hinab zu einer Breite von etwa 0,5 bis 1 μm sichtbar gemacht werden. Feinere Linien konnten allein wegen der durch das Lichtmikroskop begrenzten optische Auflösung nicht gesehen werden.

**Ansprüche**

1. Verfahren zur Informationsspeicherung in dünnen Polymerschichten, dadurch gekennzeichnet, daß man in einer dünnen, uniaxial orientierten Polymerschicht mittels energiereicher Strahlung lokal entsprechend der zu speichernden Information die Orientierung in der Polymerschicht ändert, wobei diese Orientierungsänderung ohne einen weiteren Entwicklungsschritt direkt zum Auslesen der Information verwendet werden kann.

2. Verfahren nach Anspruch 1, dadurch gekennzeichnet, daß die lokale Orientierungsänderung in der dünnen Polymerschicht durch Bestrahlen der dünnen Polymerschicht mit einem auf die dünne Polymerschicht fokussierten und gegebenenfalls entsprechend der einzuschreibenden Information modulierten energiereichen Strahl vorgenommen wird.

3. Verfahren nach Anspruch 1, dadurch gekennzeichnet, daß die lokale Orientierungsänderung in der dünnen Polymerschicht durch Bestrahlen der dünnen Polymerschicht mit energiereicher Strahlung durch eine die einzuschreibende Information tragende Maske erzeugt wird.

4. Verfahren nach einem der Ansprüche 1 bis 3, dadurch gekennzeichnet, daß die dünne, uniaxial orientierte Polymerschicht aus Polybuten-1, Polyethylen oder Polyvinylidenfluorid gebildet wird.

5. Verfahren nach einem der Ansprüche 1 bis 4, dadurch gekennzeichnet, daß die dünne unixial orientierte Polymerschicht eine Dicke von gleich oder weniger als 0,5 μm aufweist.

6. Verfahren nach einem der Ansprüche 1 bis 5, dadurch gekennzeichnet, daß das Auslesen der gespeicherten Information mittels eines Polarisationsmikroskops, eines akustischen Mikroskops, durch Messung lokaler dielektrischer Eigenschaften oder pyroelektrischer Effekte erfolgt.